(19) Europäisches Patentamt / European Patent Office / Office européen des brevets

(11) **EP 3 038 456 B1**

(12) **EUROPEAN PATENT SPECIFICATION**

(45) Date of publication and mention
of the grant of the patent:
**21.03.2018 Bulletin 2018/12**

(21) Application number: **14780767.1**

(22) Date of filing: **29.08.2014**

(51) Int Cl.:
***A01G 1/04*** *(0000.00)*

(86) International application number:
**PCT/EP2014/068368**

(87) International publication number:
**WO 2015/028601 (05.03.2015 Gazette 2015/09)**

(54) **SYSTEM AND METHODS FOR CONTINUOUS PROPAGATION AND MASS PRODUCTION OF ARBUSCULAR MYCORRHIZAL FUNGI IN LIQUID CULTURE**

SYSTEM UND VERFAHREN ZUR KONTINUIERLICHEN VERMEHRUNG UND MASSENPRODUKTION VON ARBUSKULÄREN MYCORRHIZALPILZEN IN FLÜSSIGER KULTUR

SYSTÈME ET PROCÉDÉS POUR LA PROPAGATION CONTINUE ET LA PRODUCTION DE MASSE DES CHAMPIGNONS MYCORHIZIENS ARBUSCULAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.08.2013 LU 92274**

(43) Date of publication of application:
**06.07.2016 Bulletin 2016/27**

(73) Proprietor: **Symplanta GmbH & Co. KG**
**80689 Muenchen (DE)**

(72) Inventor: **SCHUESSLER, Arthur**
**80689 Muenchen (DE)**

(74) Representative: **Schiweck, Weinzierl & Koch**
**Patentanwälte Partnerschaft mbB**
**Landsberger Straße 98**
**80339 München (DE)**

(56) References cited:
**EP-A1- 0 172 085        EP-A1- 0 433 033**
**WO-A1-2009/090220     FR-A1- 2 856 553**
**FR-A1- 2 929 489**

**Description**

**FIELD OF THE INVENTION**

The invention relates to novel methods and a liquid-cultivation based system for the continuous *in vitro* cultivation and mass production of arbuscular mycorrhizal fungi (AMF), preferably AMF propagules like spores and AMF propagules in colonized root material. FR 2 856 553 A1 discloses a method of producing arbuscular mycorrhizal fungi material.

**BACKGROUND OF THE INVENTION**

**Arbuscular mycorrhizal fungi (AMF)**

Arbuscular mycorrhizal fungi (AMF) represent an ancient monophyletic fungal lineage (*Glomeromycota*) that establishes an intimate association with the roots of about 80% of terrestrial plants: the symbiosis named arbuscular mycorrhiza (AM; sometimes also named "vesicular arbuscular mycorrhiza", VAM) (IJdo *et al.,* 2011; Schüßler & Walker, 2011; Corradi & Bonfante, 2012).

When colonizing the symbiotic plant roots, AMF penetrate the root cortex, where they form intercellular hyphae as well as intracellular hyphae and arbuscules, highly branched structures that are responsible for the exchange of nutrients between both symbionts. Some AMF species also form vesicles inside the root cells or auxiliary cells outside the roots. By exploring the surrounding soil with their hyphae, the AMF markedly increase the surface area of the plant root system and bridge nutrient depletion zones that develop around plant roots. Thereby, the symbiotic plant benefits from improved uptake of water and nutrients (e.g., phosphorous [P] and nitrogen [N]) from the soil and, in return, provides the fungus with fixed carbon sources (e.g., sugars) (Smith & Read, 2008). In addition, colonization has also been reported to enhance the plant's resistance to biotic and abiotic stresses (Harrier, 2001). Being physically and functionally associated with the symbiotic plant, the AMF reproduce in the ground by dissemination of propagules (spores and mycelium; some AMF taxa also form so-called auxiliary cells). Because of their ability to improve the growth and survival of many commercially important plants, AMF are increasingly considered for use in agriculture, forestry, landscaping, renaturation and horticulture because of their significant potential for the improvement of crop yield and health and for reduction of chemical fertilizers and/or pesticides (Strack *et al.,* 2003; IJdo et *al.,* 2011).

Despite their potential, AMF have not been broadly commercialized, mainly because of their obligate biotrophic nature, which has complicated the development of cost-efficient large-scale production of AMF material for the extensive inoculation of plants. Numerous techniques for AMF cultivation have been developed, but all are subject to problems which hinder efficient AMF inoculum production in industrial quantities. AMF have to date not been successfully cultivated under axenic (i.e., in the absence of any other organism) conditions, and current cultivation techniques are generally based on a monoxenic (one other organism present, i.e. whole plant or root organ as hosts as described in WO2009/090220) AMF culture. However, most approaches yield AMF propagules in comparably small quantities and are not suitable for an easy and efficient upscale production.

***In vitro* production of AMF in root organ culture (ROC)**

Since the late 1950s, various approaches for *in vitro* production of AMF associated with excised root organs (root organ cultures, ROC) have emerged. Mosse and Hepper (1975) pioneered in establishing the arbuscular mycorrhiza symbiosis *in vitro* by inoculating excised root organs obtained from tomato (*Lycopersicum esculentum*) and red clover (*Trifolium pratense*) with AMF spores of *Funneliformis mosseae* (syn. *Glomus mosseae*). However, colonization and sporulation were limited. The stable, naturally occurring genetic transformation of roots with root inducing (Ri) T-DNA of *Agrobacterium rhizogenes* resulted in cultivation systems that could make use of a rapid root growth independent from complex growth media and paved the way for the refinement of AMF cultivation techniques. A culture of *A. rhizogenes* transformed ("hairy") roots of *Calistegia sepium* (syn. *Convolvulus sepium;* bindweed) colonized by an AMF was reported by Mugnier and Mosse (1987). Later, Bécard and Fortin (1988) described the first *in vitro* sporulation of an AMF using *Daucus carota* (carrot) hairy roots.

Mugnier (U.S. Pat. No. 4,599,312) discloses a method of producing and culturing Ri-T-DNA transformed roots. Further, the patent relates to methods of inoculating and culturing AMF-colonized transformed roots. Although the technique theoretically allows mass-production of transformed root material in a fermenter, root infection and AMF-colonized root culture are accomplished in conventional substrate culture or conventional ROC, thereby markedly limiting the potential of cost-efficient and feasible large-scale production. , The same applies to FR2856553, which propagates the production of (non-inoculated) calli in liquid culture medium, but relies on conventional ROC for cultivation of AMF. The additional step of switching cultivation techniques further increases complexity and the risk of contamination. Although US Pat. No. 4,599,312 speculates about culturing AMF-colonized transformed roots in a fermenter, it does not provide any guidance on means and methods to do so, but rather relies on conventional ROC techniques for AMF-colonized root cultivation. The inventors focus on the mass production of un-colonized root material, but however fail to provide any methods for mass production of AMF material in liquid culture. The ROC cultivation step of the AMF-colonized root material is the bottleneck of the method disclosed in US Pat. No. 4,599,312 and FR2856553, hindering an effective up-scaling and thereby markedly lowering its potential for cost-effective mass production of AMF material. Further, in contrast to the present inventors, neither US Pat No. 4,599,312 nor FR2856553 appreciated that root material being capable of building a highly branched secondary root system and colonized by AMF should or could be employed in AMF mass production in ROC or liquid media.

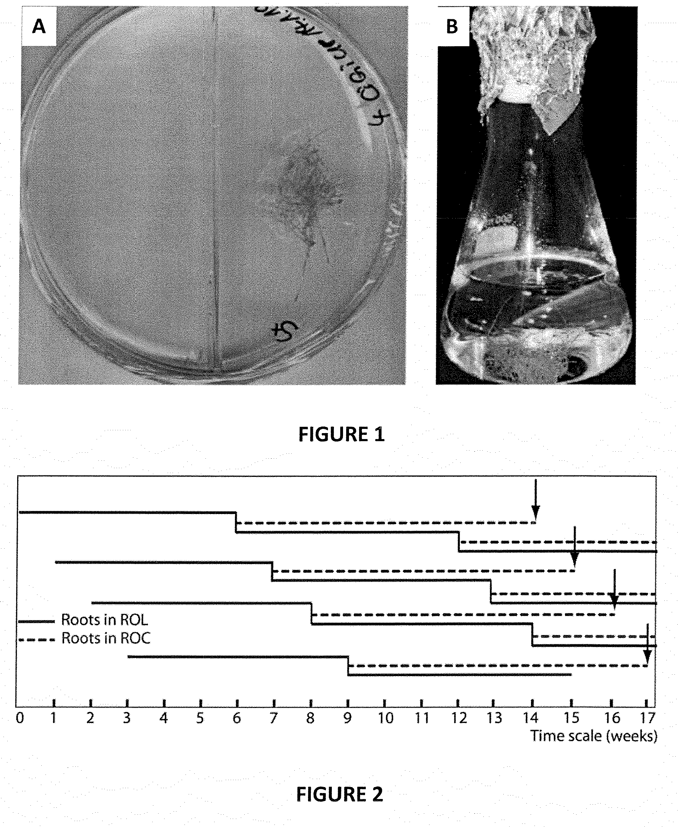

Wood et al. (EP0209627) teaches the cultivation of AMF associated with root organ cultures on solidified medium yielding an average amount of 1.7 AMF spores of *Gigaspora margarita* per ml medium. A similar approach is adopted by Strullu and Romand (EP0172085). Fortin (U.S. Pat. No. 5,554,530) discloses an improved ROC system using a two-partite Petri-dish for separating the growth of AMF hyphae and spores from the mycorrhizal roots. The excised roots are grown on solidified, sucrose containing medium in one compartment of a two-partite Petri dish (split-plate, Figure 1A). The transformed roots can be inoculated with AMF propagules in order to induce symbiotic AMF growth spreading into the second, sucrose-free compartment containing solidified medium.

ROC enables the production of AMF material under sterile *in vitro* conditions; however, it is cost- and time-consuming and still inefficient or impossible for the vast majority of AMF species. For the widely used and relatively fast growing model AMF, *Rhizophagus irregularis* (synonym: *Glomus irregulare*; formerly wrongly termed *Glomus intraradices*), three months or longer culture cycles are usually applied. A conventional ROC in a 9.4 cm diameter split plate Petri-dish with carrot (*Daucus carota*) host roots colonized by an AMF may yield approximately 8 400 to 16 800 spores per Petri plate after a cultivation period of 12 to 18 weeks (IJdo *et al.,* 2011). Fontaine et al. (2004) established the use of transformed chicory (*Cichorium intybus*) roots as host for AMF in ROC. Chicory roots facilitate the handling of *in vitro* cultured AMF, as colonized roots can be easily transferred to start new cultures, grow fast, ramify intensely, and half a year old chicory roots are still capable of new outgrowth after transfer to fresh plates, while carrot roots lose this capability earlier. The chicory based system can be grown in split plates for up to 6 months without maintenance and a significant amount of spores may be harvested after about 12 weeks (see Campagnac *et al.,* 2009).

### *In vitro* production of hairy roots in liquid culture medium

Several studies have reported the culture of hairy roots (not colonized with AMF) in liquid culture medium, e.g., in submerged cultivation systems (Mckelvey *et al.,* 1993; Nuutila *et al.,* 1995). Mist conditions (sprayed liquid medium; McKelvey *et al.,* 1993) require the provision of large volumes of liquid medium that has to be refreshed frequently. Kondo et al. (1989) experimented with a rotating drum, containing the root organs in liquid culture medium and supplied with oxygen by spinning stir or vibration. However, none of these systems has been used for the production of AMF, and stress caused by spinning stir and vibration hampers AMF growth.

### Airlift bioreactor for *in vitro* production of AMF in liquid culture medium

Jolicoeur et al (1999) reported the use of an airlift bioreactor for culturing AMF (*Rhizophagus irregularis,* therein referred to as *"Glomus intraradices"*) on carrot (*Daucus carota*) roots in liquid culture medium. A disadvantage of the system is its complex construction and the requirement of a continuous flow of sterile air. The system does not enable easy harvesting, sampling and passaging of portions of AMF-colonized root material, thereby rendering a continuous culture impracticable. Further, the authors reported a critical inoculum concentration of max. 0.6 g dry weight (DW) inoculum per liter medium, above which the growth of AMF-colonized roots relative to the amount of used inoculum decreased. In addition, the system provides a comparably very low spore yield of only 20 000 spores per liter medium (10 000 spores per 500 ml unit). This was less than the amount of spores obtained from parallel liquid culture medium Petri dish culture with 30 000 spores per liter medium (600 spores per 20 ml units). Both methods thus are more than 10-fold less efficient than the classical ROC in split plates, which results in approximately 500 000 spores per liter after 4 months (10 000 spores per 20 ml unit; St-Arnaud *et al.,* 1996); if related to the entire medium in the split plate (40 ml), the yield is lower. The spore germination level was relatively low (58%) and the mycorrhization rate (25-75%) in the airlift bioreactor did also not exceed the results obtained from the parallel liquid culture medium Petri dish culture or conventional ROCs. Moreover, the AMF-colonized root material showed high heterogeneity in spore number and hyphae distribution and in the degree of root colonization. After 69 and 93 days (about 10 and 13 weeks, respectively), the authors further report that the AMF-colonized roots and the liquid medium turned brown, and acknowledge that no more growth for both the AMF and the roots occurred from that time point.

In sum, because of its complex construction, the airlift bioreactor of Jolicoeur et al. (1999) is prone to contamination, difficult to handle, and not suitable for continuous or long-term culturing. Further, it yields only 10-20 % of the amount of spores obtained by conventional ROC after 12-16 weeks. The airlift bioreactor thus neither represents an improvement over the standard cultivation techniques, nor does it hold potential for cost-efficient and feasible mass production of AMF material.

In conclusion, current *in vitro* production techniques are often expensive, time-consuming, prone to contamination, difficult to handle and do not provide a basis for cost-effective industrial up-scale.

The technical problem underlying the present invention can thus be seen in the provision of means and methods that overcome the problems of AMF material production described in the prior art; and more specifically that enable mass-production of AMF material in a feasible and cost-efficient way.

The solution thereof is explained in the following, reflected in the aspects and embodiments described herein as well as in the claims set out below. The examples and figures serve to illustrate the invention, but do in no way limit the same.

The present inventors have developed an efficient method for production of AMF material in root organ liquid culture (ROL). To their surprise, AMF-colonized roots can be cultivated continuously *in vitro,* in liquid media, thereby enabling cost-efficient and uncomplicated mass-production of sterile AMF material. The present inventors found that AMF-colonized roots from ROL can be used efficiently to set up new cultures, thus obviating the need to re-associate fresh roots with AMF spores or use infected roots from ROC or other cultures to start new ROL cultures. Further, AMF-colonized root material from ROL can be used efficiently to establish split-plate ROC. In addition, the present inventors developed methods for increasing the efficiency and yield of ROC. The new procedure improves fungal growth performance and shortens the minimum time needed for production of fungal spores, for example, in split-plate ROC. The present inventors further found a way to maintain high colonization rates of root material. ROL cultures can moreover be easily kept for storage, at room temperature, under sterile conditions over longer periods and used for extremely efficient setup of new ROL or ROC cultures whenever needed.

Accordingly, in contrast to the prior art, the present invention estimates $10^6$ to $10^7$ AMF propagules per liter medium after 12-16 weeks of cultivation. In some embodiments, the cultivation techniques according to the present invention do not require active aeration, and thereby enable easier up-scaling. Further, the methods of the present invention do not require bioreactors having a complex design that have to be dismantled for accessing the material or changing the culture medium, as the airlift bioreactor according to Jolicoeur et al. (1999). The methods of the present invention yield about 50- to 500-times more spores than the bioreactor of Jolicoeur et al. (1999), and about 33- to 330-times more spores than in the Petri-dish liquid culture reported in their publication. In addition, the methods of the present invention can produce roots that contain high amounts of intraradical spores and vesicles. This is in contrast to the root material obtained by Jolicoeur et al. (1999) containing very few vesicles. This is a substantial difference, as vesicles (storage-lipid containing spore-like structures) and intraradical spores are efficient propagules which can be stored over long times as viable AMF inocula.

## SUMMARY OF THE INVENTION

The present inventors have surprisingly found means and methods for an improved, efficient cultivation system for AMF-colonized root material. The method disclosed hereinafter enables the cost- and time-efficient production of AMF-colonized root material in high amounts by continuous cultivation in liquid culture medium. The inventors have discovered that roots that are capable of building a branched secondary root system offer optimal preconditions for AMF mass-production in liquid culture *in vitro*, because they (re-)grow fast at high proliferation rates in liquid culture medium, are easy to handle, do not over-age quickly and preferably do not require special maintenance, and can readily be transferred to start new cultures even after very long times of persistence in the liquid medium. In contrast, root material that is not capable of building a branched secondary root system may require regular maintenance, such as regular transfer of parts of a certain lengths containing root tips in order to avoid over-ageing, and continuous re-infection of new roots with AMF material to keep mycorrhizal cultures alive. In a first aspect, the present invention thus relates to a method of producing arbuscular mycorrhizal fungi material, said method comprising: continuously culturing root material in liquid culture medium, wherein said root material is capable of building a branched secondary root system *in vitro,* and is colonized by AMF. In one preferred embodiment of the invention, the method further comprises a step of harvesting at least a portion of said root material colonized by said arbuscular mycorrhizal fungi.

Due to its superior properties, arbuscular mycorrhizal fungi-colonized root material of the present invention can easily be harvested and directly be passaged to set up new cultures. In another preferred embodiment, the method further comprises the step of passaging at least a portion of said harvested colonized root material to fresh culture medium.

In another preferred embodiment, the passaging step can precede the harvesting step of the method of the present invention.

The methods of the present invention can yield root material containing high amounts of arbuscular mycorrhizal fungi propagules. Said material can be used efficiently to inoculate plants, plant material or root material, e.g. to set up new ROC or ROL cultures. Therefore, in one preferred embodiment, at least a portion of the harvested colonized root material is used as an inoculum.

The present inventors have found that it is important to balance root growth and AMF colonization rate in order to prevent excessive growth of root material that AMF growth may not be able to compete with. In another preferred embodiment, said liquid culture medium is thus suitable for growth and maintenance of said root material and AMF.

The inventors further discovered that a very high arbuscular mycorrhizal fungi colonization rate over time could be reached by lowering the phosphate concentration. Thus, in another preferred embodiment, said liquid culture medium contains 30 μM or less phosphate during any of the culturing phases.

In another preferred embodiment, said liquid medium contains 20 mM ammonium or less during any of the culturing phases.

The method and system of the present invention is compatible with various AMF species. Hence, in another preferred embodiment, the arbuscular mycorrhizal fungus is selected from the fungal phylum *Glomeromycota,* including all classes (currently *Glomeromycetes*), orders (currently *Paraglomerales, Archaeosporales, Diversisporales, Glomerales*), families, genera and species in the phylum *Glomeromycota.*

As described above, the root material used in the method and system of the present invention possesses the capability of building a branched secondary root system *in vitro* that may be inherent or inducible. Various plants yield root material that may be suitable for use in the method and system of the present invention as long as it is capable of building a branched secondary root system *in vitro.* In a preferred embodiment of the invention, the root material is thus derived from a plant selected from the group of chicory, clover, carrot, cucumber, potato, soy bean, haricot bean, kalanchoe, ginger, strawberry or bindweed. A particularly preferred root material is capable of building a branched secondary root system *in vitro* in a manner analogous to chicory root material transformed with T-DNA as described herein. "Analogous to chicory root material" means that root material other than chicory root material is capable of building a branched secondary root system (i) within the same time frame as the chicory root material, and/or (ii) to the same amount/extent as the chicory root material. In particular, the term refers to root material that preferably stays viable and is able to proliferate even after being cut into small pieces of about 1-10 mm, such as, e.g., 5 mm. After placing the pieces on or in fresh culture medium, the majority of such small fragments will preferably regrow. This is largely independent from their former location in the root system, and roots will preferably, e.g., also grow at the cut face. In contrast, root material derived from carrot, which is most frequently used for conventional ROC, build less secondary roots than chicory-derived root material, and bigger pieces of about 2-10 cm including a root tip have to be used to achieve new root outgrowth. Classical approaches using transformed carrot roots even take 6-8 cm pieces with side roots of 1-2 cm to ensure new root growth from the limited number of root tips for the majority of root fragments, after setup of new cultures (Cranenbrouck *et al.,* 2005). The chicory root material is preferably from ChicoryA4NH as obtainable from the *Glomeromycota in vitro* collection (GINCO).

The root material may be genetically transformed by inserting transfer DNA (T-DNA). Thus, in another preferred embodiment, the root material is transformed with T-DNA that preferably induces root growth and/or immortalizes roots.

The T-DNA is a DNA region that can be derived from the genetic material of bacteria from the genus *Agrobacterium.* Hence, in another preferred embodiment, said T-DNA is derived from *Agrobacterium,* more preferably from *Agrobacterium tumefaciens* or *Agrobacterium rhizogenes.*

The root material may be further cultured in the presence of plant hormones and vitamins. In another preferred embodiment, the liquid medium is thus supplemented with plant hormones and/or vitamins. Antibiotics can be added to the culture in order to prevent or suppress microbial contamination, for example in the process of establishing new arbuscular mycorrhizal fungi in *in vitro* cultures. Therefore, in one preferred embodiment, the liquid medium contains antibiotics.

The invention further relates in another aspect to a contamination-free arbuscular mycorrhizal inoculum composition produced under sterile conditions by the method of any one the embodiments described herein, comprising propagules in a particle size in the range down to 30 μm and propagule densities of up to more than $10^6$ AMF propagules per gram dry mass of root material.

The invention also provides in a another aspect a bioreactor for continuous *in vitro* cultivation of arbuscular mycorrhizal fungi, comprising the root material of any one of the aforementioned embodiments inoculated with and colonized by arbuscular mycorrhizal fungi of any one of the aforementioned embodiments and the liquid culture medium of any one of the aforementioned embodiments.

In another aspect, the present invention concerns the use of root material that is capable of building a branched secondary root system *in vitro* for continuously producing arbuscular mycorrhizal fungi material in liquid culture medium.

It must be noted that as used herein, the singular forms "a", "an", and "the", include plural references unless the context clearly indicates otherwise. Thus, for example, reference to "a reagent" includes one or more of such different reagents and reference to "the method" includes reference to equivalent steps and methods known to those of ordinary skill in the art that could be modified or substituted for the methods described herein.

Unless otherwise indicated, the term "at least" preceding a series of elements is to be understood to refer to every element in the series. Those skilled in the art will recognize, or be able to ascertain using no more than routine experimentation, many equivalents to the specific embodiments of the invention described herein. Such equivalents are intended to be encompassed by the present invention.

The term "and/or" wherever used herein includes the meaning of "and", "or" and "all or any other combination of the elements connected by said term".

The term "about" or "approximately" as used herein means within 20%, preferably within 10%, and more preferably within 5% of a given value or range. It includes, however, also the concrete number, e.g., about 20 includes 20.

The term "less than" or "greater than" includes the concrete number. For example, less than 20 means less than or equal to. Similarly, more than or greater than means more than or equal to, or greater than or equal to, respectively.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. When used herein the term "comprising" can be substituted with the term "containing" or "including" or sometimes when used herein with the term "having".

When used herein "consisting of" excludes any element, step, or ingredient not specified in the claim element. When used herein, "consisting essentially of" does not exclude materials or steps that do not materially affect the basic and novel characteristics of the claim.

In each instance herein any of the terms "comprising", "consisting essentially of" and "consisting of" may be replaced with either of the other two terms.

It should be understood that this invention is not limited to the particular methodology, protocols, material, reagents, and substances, etc., described herein and as such can vary. The terminology used herein is for the purpose of describing particular embodiments only, and is not intended to limit the scope of the present invention, which is defined solely by the claims.

All publications and patents cited throughout the text of this specification (including all patents, patent applications, scientific publications, manufacturer's specifications, instructions, etc.), whether supra or infra, are hereby incorporated by reference in their entirety. Nothing herein is to be construed as an admission that the invention is not entitled to antedate such disclosure by virtue of prior invention. To the extent the material incorporated by reference contradicts or is inconsistent with this specification, the specification will supersede any such material.

## DETAILED DESCRIPTION OF THE INVENTION

Due to their beneficial effects on host plants, AMF hold considerable potential for use in agriculture, forestry and horticulture. However, the production of sufficient amounts of AMF material under sterile conditions for commercial and/or scientific use is complicated by their obligate biotrophic nature. To overcome the obstacles associated with AMF culture and production, various approaches have been adopted throughout the past decades, but none of them provided a method for cost-efficient mass production of AMF material under sterile conditions. The present invention provides a continuous cultivation method of *in vitro* root organ liquid culture (ROL) for the production of AMF material. It is faster, easier to setup and harvest, more robust, more productive and thus cheaper than the conventional *in vitro* root organ culture (ROC), and it is easily reproducible. Also, in ROL the medium can easily be modified or exchanged, e.g., to trigger spore production or extend active growth cycles, which is not possible in ROC. Further, the method comes along with an improved AMF growth, and a reduction of time for AMF spore production. It enables the fast production of AMF material in split-plate ROC and the long-time sterile storage of AMF-colonized root material in liquid medium, e.g., as stock cultures, and it can readily be up-scaled for cost-efficient AMF mass-production. The invention further includes a modified split-plate ROC that facilitates fungal growth and the harvesting of AMF material from the fungal compartment.

The term "AMF" as used herein refers to arbuscular mycorrhizal fungi. AMF represent a fungal lineage that is widely distributed in soils worldwide and establishes symbiotic relationships with the roots of the majority of plant species (about 80%). The AMF species are all integrated in the phylum *Glomeromycota,* currently comprising about 240 described species distributed among 25 (26 when including *Entrophospora*) genera (Schüßler & Walker, 2011; Redecker *et al.,* 2013).

The AMF used in the embodiments of the present invention may be any species selected from the phylum *Glomeromycota.* The person skilled in the art will acknowledge that AMF classification has been revised over time and may or may not be subjected to further modifications in the future. Currently, all AMF are grouped in the phylum *Glomeromycota,* comprising the orders of *Paraglomerales, Archaeosporales, Diversisporales,* and *Glomerales.* In general, the AMF according to the present invention can be selected from any class, order, family, genus and species of the phylum *Glomeromycota.* The AMF may be selected from the class *Glomeromycetes.* Further, the AMF may be selected from an order selected from, but not limited to, the group of *Paraglomerales, Archaeosporales, Diversisporales,* or *Glomerales.* In one embodiment, the AMF is selected from the species *Rhizophagus irregularis* (synonym: *Glomus irregulare,* earlier often wrongly named *Glomus intraradices*). In one particularly preferred embodiment, the AMF is selected from the group of *Rhizophagus irregularis* MUCL43194 (=DAOM181602, =DAOM197198), other *Rhizophagus irregularis* strains (DAOM229457, DAOM234179, DAOM234180, DAOM234181), *Rhizophagus clarus* MUCL46238 (=DAOM234281), *Rhizophagus diaphanus* (synonym: *Glomus diaphanum*; DAOM227022 [this culture was earlier mis-annotated as *Glomus cerebriforme*]), other species closely related to *Rhizophagus diaphanus* (DAOM229456), *Claroideoglomus claroideum* (synonym: *Glomus claroideum*; DAOM235379) or uncharacterized species (DAOM212349, DAOM229455) as obtainable from the *Glomeromycota in vitro* Collection (GINCO). The person skilled in the art can easily determine whether a particular AMF species can be grown in ROL culture. Briefly, ROL can be set up as described herein, and the root colonization can be quantified either visually under the dissecting microscope, by microscopy of roots after AMF staining, or by determining the ROC success rate (RSR) as described herein.

The term "fungi" or "fungal" as used herein refers to AMF.

"Arbuscular mycorrhizal fungi material" or "AMF material" as used herein refers to, but is not limited to, AMF mycelium, hyphae, vesicles, arbuscules and/or other propagules.

The terms "propagule" or "propagules" as used herein refer to material that acts as an agent of AMF reproduction. More specifically, the term "propagule" refers to AMF spores, auxiliary cells, hyphae, hyphal fragments and/or vesicles.

An "AMF inoculum" that is used to initiate AMF growth on roots *in vivo* or *in vitro* preferably comprises AMF propagules. It may further comprise other AMF material, root material and/or residual culture medium or substrate. AMF inocula may be prepared by harvesting the fungal compartment of split-plate ROC. The present invention further relates to the preparation of mixed (i.e., comprising root material and AMF material) AMF inocula from ROL.

The term "colonized" as used herein refers to a condition wherein AMF grow on the root material. The root colonization rate can, e.g., be determined by a line intersection method (McGonigle *et al.,* 1990) after methyl-blue staining (Grace & Stribley, 1991), see the cited documents for complete protocols.

The term "ROL" or "ROL culture" as used herein refers to a method of root organ liquid culture wherein AMF-colonized root material is kept in liquid culture medium under culture conditions described hereinafter. Accordingly, the term "ROL culture system" refers to a system wherein ROL culture is established and/or maintained.

It is to be appreciated that the term "root material" comprises isolated root material and whole plants having roots or being capable of building roots. The term "whole plants" includes whole vascular plants and whole non-vascular plants like, e.g., liverworts or hornworts. If whole plants are applied that are capable of photosynthesis in the present invention it may not be necessary to add sucrose or another carbon source to the culture medium applied in the present invention. It was shown (by one of the present inventors) that hornworts can be used to cultivate AMF in a ROC system without addition of a carbon source (Schüßler, 2000) and that liverworts can be used as hosts for AMF in ROC systems combining photosynthetic activity of the liverwort thallus and feeding with sugar (Fonseca *et al.,* 2006). In general, root material according to the present invention can be derived from non-vascular or vascular plants. Non-vascular plants include *Bryophyta* (mosses), *Marchantiophyta* (liverworts), *Anthocerotophyta* (hornworts) and algae (e.g. *Chorales* [stoneworts]). Vascular plants, also known as tracheophytes, include clubmosses, horsetails, ferns, gymnosperms and angiosperms. Preferably, the root material is derived from dicotyledones or monocotyledones. More preferably the root material is derived from a plant selected from, but not limited to, chicory *(Cichorium intybus),* clover (*Trifolium* species), carrot (*Daucus carota*), cucumber (*Cucumis sativus*), potato (*Solanum tuberosum*), soy bean (*Glycine max*), haricot bean (*Phaseolus vulgaris*), *Kalanchoe* species, ginger (*Zingiber officinale*), strawberry (*Fragaria* species) or bindweed (*Convolvulus sepium*). In one particularly preferred embodiment, the root material is derived from ChicoryA4NH as obtainable from the *Glomeromycota in vitro* collection (GINCO). The root material used in the method and system of the present invention is preferably capable of building a branched secondary root system *in vitro.* The capability of building a branched secondary root system may be referred to as "ramification capacity" hereinafter. The term "host" as used herein generally refers to the symbiotic partner of an AMF, e.g. the root material applied according to the present invention can also be referred to as "host".

Prior to the present invention, the major impact of the root ramification capacity for continuous AMF *in vitro* production had not been appreciated. The present inventors have found that continuous cultivation of AMF is improved with root material possessing the ability to build a highly branched secondary root system *in vitro.* Not only does a high ramification capacity increase growth and biomass yield of the root material, but it also appears to readily enable colonization by AMF and allow efficient propagation of small units. Thus, the present inventors developed a method to grow the root material quickly at high colonization rates. The capability of building a branched secondary root system *in vitro* can be tested by growing immortalized roots in ROC or ROL with or without AMF. After propagation for several weeks the roots should form a branched system which can be cut to small pieces which are usable as new propagation units. If only a small portion of these pieces is able to propagate further, the tested roots are not well-suitable for a fast and simultaneous setup of a large number of cultures, originating from reasonably sized stock-cultures. In sum, the capability of the root material to build a branched secondary root system *in vitro* that can be easily propagated was only recognized by the present inventors as a decisive feature that allows the continuous culturing for the production of AMF as described herein.

Said ability may be inherent to the used root material, or it may be induced by genetic transformation and/or cultivation in the presence of plant hormones and/or vitamins.

The root material is preferably genetically transformed by transfer DNA (T-DNA), which is naturally harbored by bacterial species that establish a close relationship to specific host plants and derives its name from the fact that it is transferred into the nuclear DNA genome of the host plant. The T-DNA may be comprised in a Tumor-inducing (Ti)-plasmid, or a Root-inducing (Ri-) plasmid. The T-DNA may be derived from *Agrobacterium* sp., a genus of Gram-negative soil bacteria that can cause plant tumors by horizontal gene transfer of T-DNA. The *Agrobacterium* may be *Agrobacterium rhizogenes* or *Agrobacterium tumefaciens.* The genetic transformation with T-DNA follows a standard protocol that is known by the person in the art. The genetic transformation with said T-DNA causes a condition known as hairy roots which are typically capable of growing quickly and independently on culture medium *in vitro* (Tepfer, 1990).

Root material may also be cultured in medium supplied with plant hormones and/or vitamins in order to increase its ramification capacity. Suitable plant hormones include, but are not limited to hormones of the auxin type (e.g. indole-3-acetic acid, indole-3-butyric acid, phenylacetic acid and others), the cytokinin type (e.g. kinetin, 6-benzylaminopurine, zeatin and others) or any other phytohormone, and combinations thereof. Vitamins include, but are not limited to any of the vitamins included in standard MSR or MS medium, niacin, riboflavin, folic acid or other vitamins and any combination thereof.

## Cultivation

The present inventors developed a method and a system for root organ liquid culture (ROL) of AMF-colonized root material that can be applied in recurrent cycles, thereby enabling a continuous cultivation of AMF. Further, it readily facilitates up-scaling of AMF cultivation, either in ROL or in subsequent ROC.

The terms "cultivation" and "culturing" as used herein refer to the production of fungal or root material by culture. Preferably, when being cultured in liquid medium in accordance with the teaching of the present invention, the root material including root material colonized by AM fungi is submerged, i.e., continuously surrounded and/or covered by medium, preferably liquid medium.

The terms "continuously culturing" or "continuous culture" as used herein refer to a method of maintaining AMF-colonized root material that is uninterrupted in terms of substantial culturing conditions. More specifically, the term refers to a method of culturing at least two, preferably three, more preferably four, even more preferably five or more subsequent generations of AMF-colonized root material under ROL culture conditions in the same reactor and/or by passaging parts of them to new reactors, continuously. Said continuous culturing also includes that preferably no fresh AMF-colonized root material is added to the culture during any of the culturing phases. This is in clear contrast to the prior art, e.g. Jolicoeur et al. (1999).

For example, the term "continuous culture" includes starting ROL culture in a reactor as described herein, and after the desired amount and/or quality of inoculated root material has been reached, harvest the inoculated root material and use portions of it to set up new ROL cultures.

The term also includes starting ROL in a reactor as described herein ("initial ROL culture"), and after the desired amount and/or quality of inoculated root material has been reached, harvest the majority of the inoculated root material and let the remaining root material grow again. The skilled person will readily acknowledge which further measures may be needed to maintain sterility in the initial ROL culture even after harvest. Culture medium and supplements may be added during any phase of the cultivation cycle.

Preferably, in one embodiment cultivation of AMF in ROL reaches a proliferation rate of at least 1 000 000 AMF propagules to about 10 000 000 AMF propagules per liter medium within 12-16 weeks, and is more efficient than other methods of the prior art. Proliferation rates are for example dependent on the AMF strain.

### a. Initiation

The continuous ROL culture method of the present invention can be set up by transferring a portion of AMF-colonized root material into a ROL culture system. Said AMF-colonized root material may be obtained from a ROC or ROL culture, or any other suitable method or culture. The person skilled in the art knows how to establish ROC of AMF-colonized root material (for review, see Fortin *et al.,* 2002). The root material may be transformed with T-DNA following protocols available in accordance with the state of the art

(see US Pat No. 4,599,312)

Alternatively, the AMF-colonized root material used to set up the ROL culture may be obtained from a preceding ROL culture that functions as a "stock culture". The term "stock culture" further in general refers to AMF-colonized root material that is used to set up a new culture.

It will be appreciated that the amount of AMF-colonized root material used to set up the initial ROL culture can vary with respect to the AMF, the root material, the culture conditions and/or the desired cultivation period. For example, ROL can be established with about $\dfrac{1-5\ g\ (fresh\ weight)\ AMF-colonized\ root\ material}{1\ L\ culture\ medium}$. However, more or less AMF-colonized root material can be used depending on, e.g., the colonization rate of the applied root material.

**b. Maintenance**

The present invention provides a method for mass-producing AMF-colonized root material under ROL culture conditions. The term "culture conditions" as used herein refers to the overall culturing situation depending on the specific culture parameters. It will be appreciated that culture conditions may vary dependent on the specific culture parameters. The person skilled in the art will acknowledge that culture parameters and, in consequence, culture conditions may change or may be maintained over culturing phases and/or the cultivation period. The "cultivation period" is the time period from initiation to passaging and/or harvesting of the culture. A "culturing phase" is a period of time during the cultivation period.

The term "culture parameters" as used herein refers to, but is not limited to, type and/or amount of root material, type and/or amount of AMF, age, colonization rate and/or amount of AMF-colonized root material, medium composition, phosphate content, ammonium content, medium volume, cultivation time, oxygen content, temperature, lighting situation. It will be appreciated that culture parameters may change or be maintained constantly over any culturing phase or the overall cultivation period.

*Volume*

The ROL culture according to the present invention is maintained in liquid culture medium. The volume and composition of the liquid medium can vary depending on the other culture parameters. The continuous ROL culture method of the present invention can be performed in any suitable culture vessel that is capable of retaining the desired amount of liquid culture medium. The volume of liquid culture medium in the ROL culture system of the present invention in laboratory scale production is preferably 200-400 ml, but can easily be upscaled to several liters or hecto liters or more.

ROL culture can in general be performed in any suitable culture flask as long as it allows growth of inoculated root material and can preferably kept sterile. It can for example be made from glas or plastic, etc. E.g., Erlenmeyer flasks can be used. Cell culture flasks are also envisaged for use in accordance with the present invention.

*Medium composition*

The person skilled in the art acknowledges that the composition of the medium used in the method of the present invention may vary depending on other culture parameters.

Two culture media are commonly used to culture AMF *in vitro*; the minimal medium (M-Medium), and the modified Strullu Romand (MSR) Medium; both contain micronutrients and macronutrients as well as vitamins and sucrose (see IJdo *et al.,* 2011 for review), another one is the so-called G-Medium. While the media are typically solidified by using a gelling agent for ROC, omitting the gelling agent can render the media suitable for ROL culture. Besides, all media may be subjected to further modifications. Thus, in one preferred embodiment, the medium may be based on M-medium (Bécard & Fortin, 1988). In another preferred embodiment, the medium may be based on Strullu and Romand (MSR) medium (Strullu & Romand, 1986), modified by Declerck et al. (1998). In yet another preferred embodiment, the medium may be based on modified Murashige Skoog (MS) medium. It is further envisaged that mixtures of the aforementioned or other culture media can be applied. Common plant growth media, like MS, have been successfully adapted by the present inventors for ROC and ROL.

In order to obtain a sufficient amount of well-colonized root material, it is important that the liquid medium used for ROL culture enables both maintenance and growth of root material as well as of the AMF colonizing said root material to balance the growth of root material and AMF. In one preferred embodiment, said liquid culture medium is thus suitable for maintenance and growth of said root material and AMF material.

*Ammonium*

The authors have found that, although published as containing 180 $\mu$M ammonium (Declerck et al. 1998), the MSR medium contains only 188 nM ammonium. Ammonium ($NH_4^+$) may be added to the medium in the form of ammonium sulfate (($NH_4$)$_2SO_4$) or ammonium chloride ($NH_4Cl$) or any other ammonium salts. The invention thus also covers a modified MSR medium containing about 300 $\mu$M ammonium rather than 188 nM ammonium. Said medium contains the components of MSR medium in the concentrations as shown in Table 1, except for the change in ammonium and sulphate concentration.

Without wishing to be bound by a specific theory, it is assumed that the increase in ammonium has substantially contributed to the intriguing findings of the present inventors in establishing the means and methods of the present invention. In one preferred embodiment, the culture medium thus contains less than 20 mM ammonium during any of the culturing phases, such as, e.g. between 1 $\mu$M and 2 mM ammonium.

*Phosphate*

Both MSR- and M-medium contain phosphate that may have been added to the medium in the form of potassium dihydrogen phosphate ($KH_2PO_4$), dipotassium hydrogen phosphate ($K_2HPO_4$), or any other phosphate salts. The standard phosphate concentration in MSR- medium and M-medium is 30 $\mu$M. However, after several ROL cycles, AMF colonization may become low due to excessive growth of the root material. In order to avoid a drop in AMF colonization after several passages of ROL culture, the phosphate content of the liquid culture medium may be reduced. Thus, in one preferred embodiment, the liquid culture medium contains less than 30 $\mu$M phosphate during any of the culturing phases. For example, the liquid culture medium may contain 20, 10, 7.5, 5, 2.5, 1, or 0.5 $\mu$M phosphate. In one preferred embodiment, the phosphate content of the culture medium is 3 $\mu$M. In a further preferred embodiment, the liquid culture medium contains 0 $\mu$M phosphate. The amount of phosphate is another feature that was found by the present inventors to play an important role in the means and methods described herein.

The present inventors were the first to discover the influence of phosphate content on the applicability of long-term and continuous ROL cultivation of AMF-colonized root material. To their surprise, ROL can even be stored long-time in the absence of any phosphate in the liquid medium, with root material and AMF remaining viable after 10 months or more and being suitable as highly efficient starter material for new cultures.

*Antibiotics*

Further, antibiotics can be added to the liquid culture medium in order to prevent or suppress microbial contamination. This is a great advantage over conventional ROC, where contaminated cultures usually have to be discarded. Antibiotics can be easily added to the ROL culture and can be distributed evenly in the entire culturing medium by diffusion or by agitation.

Suitable antibiotics can be selected from the group of classical beta-lactam antibiotics (= penicillins, e.g. ampicillin, amoxicillin, carbenicillin), subgroups of beta-lactam antibiotics like cephalosporins (e.g. cefotaxim), tetracyclines, sulfonamides, macrolides, quinolones, aminoglycosides, nitrofurans or any other group of antibiotics acting against gram-negative and/or gram-positive bacteria. In one preferred embodiment, the liquid culture medium thus contains antibiotics.

In one aspect, the present invention relates a culture medium containing less than 30 $\mu$M phosphate and/or less than 20 mM ammonium during any of the culturing phases. Optionally, said culture medium further comprises antibiotics and/or plant hormones and/or vitamins. Said culture medium may be based on MSR medium, M-Medium, MS-Medium or G-Medium or any other medium suitable for both AMF and root material growth.

*Flavonoids*

It is further envisaged to add flavonoids to the liquid culture medium. Without wishing to be bound by theory, it is thought that flavonoids stimulate growth of the root material. The term "flavonoid" as used herein refers to a class of plant secondary metabolites and includes flavonoids, isoflavonoids and neoflavonoids. Exemplary flavonoids for use in accordance with the present invention include without limitation flavones, flavonols (3-hydroxyflavones), flavanones, flavanonols (3-hydroxyflavanones, 2,3-dihydroflavonols). Preferred flavonoids are described in EP 0456808.

Flavonoids can be extracted from plants. It is envisaged within the present invention to add plant extracts comprising flavonoids to the liquid culture medium of the ROL culture. Said extracts may, however, also comprise other compounds, such as additional secondary plant metabolites. One exemplary preferred plant extract for use in accordance with the present invention is red clover extract. Other plant extracts are, however, also envisaged.

*Temperature*

The ROL culture method of the present invention can be maintained at temperatures in a wide range, from about 10°C to 30°C or even higher. In one preferred embodiment, the ROL culture is maintained at 25-28°C, more specifically at 27°C.

*Light*

Cultivation can be in light or dark. Choosing suitable lighting conditions typically depends on the selected root material. For example, if excised root organs are chosen as the host, ROL may be preferably accomplished in the dark. If photosynthetically active whole plants are chosen as the host, ROL may preferably be accomplished in light.

*Shaking*

The ROL culture according to the present invention may be subjected to constant or periodical slight shaking to facilitate nutrient distribution and/or gas exchange. The shaking frequency may range from 0 rpm to 60 rpm. In a preferred embodiment, the ROL culture is subjected to constant shaking at 30 rpm. In yet another preferred embodiment, the ROL culture is not subjected to shaking and/or stirring and/or gassing. Preferably, if no shaking, stirring or gassing is performed, the ROL culture is accomplished in culture vessels allowing a high liquid-surface-to-volume-ratio and/or a gas permeable lid; gas exchange solely by diffusion, often in parallel to some convection, e.g., by slight temperature differences/fluctuations. In another preferred embodiment, the ROL culture is maintained in completely closed plastic culture vessels.

*Time*

Depending on the culturing conditions, the ROL culture can be maintained for varying periods of time. AMF-colonized root material may be kept in ROL culture for 10 months or more, still yielding viable colonized roots and AMF material. However, if desired, a ROL culture cycle can also be interrupted by steps of harvesting and/or passaging as soon as a sufficient amount of AMF-colonized root material is available. In one preferred embodiment, the harvesting and/or passaging step is performed 8 weeks after ROL culture initiation. In another preferred embodiment the same is performed after 12 weeks, in another one at 16 weeks. The time needed, however, will depend on the AMF species cultured and on the cultivation parameters.

## c. Passaging

The method of the present invention may further comprise a step of passaging. The term "passaging" as used herein refers to the process of transferring a portion of AMF-colonized root material to a new ROL culture system.

In some preferred embodiments of the invention, the passaging step may be carried out in parallel to the harvesting step described below. In other preferred embodiments of the invention, the passaging step may be carried out before or after the harvesting step described below. The passaging step may be repeated indefinite times resulting in succeeding ROL cycles of a continuous ROL culture.

The amount of AMF-colonized root material used for passaging may vary depending on the culture conditions and/or the intended processing. In one preferred embodiment, ROL is established with about

$$\frac{1-5\ g\ (fresh\ weight)\ AMF-colonized\ root\ material}{1\ L\ culture\ medium}.$$ However, more or less AMF-colonized root material can be used, depending on, e.g., the colonization rate. For example, cultures can be established efficiently with even less than 0.1 gram (fresh weight), provided the material was cultured before under conditions that ensure high colonization rates (e.g., low phosphate content or sufficiently long culturing cycles).

The colonization rate of subsequent passages of AMF-colonized root material can be monitored by using part of the AMF-colonized root material intended for passaging to set up ROC and determine the ROC success rate by estimating the proportion of ROC plates with significantly colonized fungal compartments, at a defined time after inoculation. Optimization experiments for differing ROL conditions typically resulted in ROC success rates of at least 30-60 % already after 6 weeks of ROL culture. Dependent on adjustment of the growth conditions to high colonization efficiency (low phosphate content or longer culture cycles), AMF-colonized root material obtained from successive ROL cycles will typically result in ROC success rates of 50-100 %. For the use of stock material as culture-starters a 100% success rate can be reached by simply using >9 months cultivated stock-culture ROLs, even when using less than 0.2 g inoculum.

## e. Harvesting and inoculum preparation

In one preferred embodiment, the ROL culture according to the present invention can be performed by incubating AMF-colonized root material in liquid culture medium for a sufficient period of time and harvesting at least a portion of AMF-colonized root material. The person skilled in the art knows that the sufficient period of time allowed to elapse before harvesting the AMF-colonized root material may vary depending on the amount of AMF-colonized root material, the colonization rate, the sporulation rate, the AMF species used, the culture parameters and/or the intended processing or other parameters. The term "harvesting at least a portion" as used herein means recovering at least one part or all of the AMF-colonized root material. The harvesting may be accomplished under sterile or non-sterile conditions depending on the further processing. In some preferred embodiments of the invention, AMF-colonized root material may be harvested after 8 weeks or later, such as 9, 10, 11, 12 weeks or even later for inoculum preparation.

Following harvesting, the mycorrhizal roots may be processed into a suitable form for their intended use. For use as inocula, the AMF-colonized roots may simply be cut into pieces of desired size, dried and mixed with the desired carrier material to reach the desired concentration of AMF propagules per gram.

Accordingly, the present invention relates in one aspect to a method of producing AMF material, comprising continuously culturing root material in liquid culture medium, wherein said root material is capable of building a branched secondary root system *in vitro* and is colonized by arbuscular mycorrhizal fungi. It may further comprise a step of harvesting at least a portion of said root material colonized by said AMF. Further, a step of passaging at least a portion of said harvested colonized root material to fresh culture medium may be included. At least a portion of the harvested colonized root material can be used as an inoculum. The passaging step may precede the harvesting step. Further applicable embodiments have been described herein.

All of the steps described herein for ROL and for ROC may be performed under sterile conditions, meaning that unwanted contamination with microorganisms is reduced or preferably prevented. For inoculum preparation, sterile handling is particularly preferred, so that a contamination-free AMF inoculum is obtained. "Contamination-free" refers to a state where essentially no or no unwanted microorganisms are present.

In another aspect, the invention thus further relates to a contamination-free AMF inoculum composition produced under sterile conditions by the method as set out herein, comprising propagules in a particle size in the range down to 30 $\mu$m and propagule densities of up to more than $10^6$ AMF propagules per gram dry mass of root material.

In another aspect, the invention relates to a composition comprising propagules and which is preferably free of polysaccharide carriers and/or a polysaccharide matrix, such as gellan-gum, agar-agar and the like. Such a composition may be either in liquid form, dried form or solid form. Such a composition my comprise propagules in a particle size in the range down to 30 $\mu$m and propagule densities of up to more than $10^6$ AMF propagules per gram dry mass of root material. Such a composition may comprise flavonoids.

**f. ROL-based ROC**

The AMF-colonized root material obtained from ROL culture may be used to establish new ROL cultures, but may, however, additionally or exclusively, also be used to set up new ROC (hereinafter also referred to as ROL-based ROC). The ROC system may be a split-plate ROC. Moreover, the sterile material obtained by ROL may also be used as starter inoculum for classical production on solid substrates in open systems.

***Culture conditions***

The term "ROC" or "root organ culture" as used herein refers to a method of *in vitro* cultivation of AMF-colonized root material on solidified culture medium. "ROL-based ROC" is a ROC that has been initiated with AMF-colonized root material obtained from a preceding ROL culture as described herein. "ROC-based ROC", on the other hand, refers to ROC that has been initiated with AMF-colonized root material obtained from a preceding ROC. "Split-plate ROC" is preferably accomplished on a bi-partite or multi-partite Petri-dish comprising a compartment suitable for (AMF-colonized) root organ growth ('root compartment') and a compartment suitable for AMF propagation ('fungal compartment').

***Culture medium***

The ROC culture medium may be based on M-medium or MSR medium as described above for ROL culture. However, modified medium as described in accordance with the findings of the present invention is preferred and there are many variants that may be further developed for ROL-based ROC.

***Gelling agent***

In a preferred embodiment, the culture medium in both ROC compartments is solidified by a gelling agent. Said gelling agent may be selected from the group of polysaccharides like gellan gum, agar agar, agarose, or any other suitable gelling agent. The present inventors have observed that the gelling agent concentration in the fungal compartment considerably influences the successful colonization of said fungal compartment, and can be reduced compared to prior art methods. In a preferred embodiment of the invention, the gelling agent is present in the medium of the fungal compartment at a concentration 0.3% (w/v) or less, preferably at a concentration of 0.25%, 0.2%, 0.15% and most preferably at a concentration of 0.1% or 0.05% (w/v). Concentrations between 0.1% and 0.05% (w/v) of the gelling agent enable faster AMF hyphal growth, and thereby shorten the colonization time of the fungal compartment. A faster colonization comes with a more synchronized development and the low concentrations of gelling agent enable the easy recovery of the AMF material from the fungal compartment as described in for harvesting of the ROL-based ROC.

### Sucrose concentration

In a further preferred embodiment, the ROC culture medium is supplemented with sucrose in the root compartment. Preferably, the concentration of sucrose in the root compartment is lower than 5%. More preferably, the sucrose concentration in the root compartment ranges between 3% and 0.5% (w/v).

### Temperature and light

The split-plate ROCs are preferably incubated in the dark, but may also be cultivated in light. The temperature for split-plate ROC preferably ranges from 20°C to 30°C, most preferably from 25°C to 27°C.

### Initiation

In order to set up a new ROC from a preceding ROL culture, a sufficient amount of AMF-colonized root material is transferred to a ROC system as described above. In one preferred embodiment, the amount of AMF-colonized root material obtained from a ROL culture and used to set up a new ROC may range from less than 0.1 to more than 5 g (fresh weight), preferably 0.1 to 0.3 g (fresh weight). The AMF-colonized root material from ROL culture may be used to set up new ROC after 4, 5, 6, 7, 8, 9, 10, 11 or 12 weeks or later preferably after 6-12 weeks. However, AMF-colonized root material may be used to set up new ROC whenever a sufficient amount of material is available for establishing the desired number of ROC. Depending on the culture conditions, AMF-colonized root material can be kept in ROL culture for 10 months or more and can still be used to set up new ROC.

### Harvesting

The present inventors have found that ROC using low gelling agent concentrations as indicated above enables the rapid extraction of pure fungal material from the fungal compartment of the split-plates by simply pouring it out of the plates or other culture vessels. The resulting gel may be further liquefied by simply mixing it with 1 or 2 volumes sterile deionized water and shaking, thereby obviating the use of 10 mM citrate buffer (pH 6) for dissolving the solidified medium of the fungal compartment, as normally done for the standard concentration of 0.3% (w/v) of gelling agent. The fungal material can then immediately and easily be harvested and also concentrated, for example by centrifugation at 10,000 g for 5 to 10 minutes when in a 0.05-0.1% gellan gum containing gel, or by vacuum filtration through a 20 $\mu$m nylon sieve.

### Processing

The AMF-colonized root material obtained from ROL-based ROC may be used for mRNA extraction, biochemical studies or inoculation of plants or other purposes. Since the proportion of split-plates with colonized fungal compartments of all ROCs set up at one time point (ROC success rate, RSR) corresponds to the colonization rate of the root material used to set up the cultures, monitoring the development of ROC fungal compartments (as RSR) allows reliable conclusions on the colonization rate of the root material, without the need of destructive sampling and staining-based analyses.

The AMF-colonized root material obtained from ROL-based ROC can further be used to set up new ROC or ROL cultures.

When AMF-colonized root material from ROL cultures as described herein were used for ROL-based ROC initiation, new ROC or ROL cultures can be set up about 4-8 weeks or more after ROL-based ROC initiation, depending on the desired fungal stage. The "desired fungal state" may be for example a sporulating state, or any other state. After 6-12 weeks or later, AMF material can be harvested. These time spans may vary depending on differing growth rates of distinct AMF species, different cultivation parameters and other factors. In some embodiments of the present invention (e.g., for use as stock cultures for highly efficient establishment of new cultures from small amounts used for inoculation) longer cultivation periods may be advantageous over fast mass production strategies for inoculum production, e.g. for agricultural application. The *Rhizophagus irregularis* AMF biomass harvested per standard split-plate ROC ranges approximately from 80-120 mg fresh weight per plate after 8 weeks, including hyphal mycelium, which corresponds to about 10,000 spores per split-plate fungal compartment, depending on the cultivation parameters.

The ROL-based ROC offers great advantages over the conventional ROC-based ROC; because it markedly shortens the time required for obtaining the desired AMF material or AMF-colonized root material. ROC-based ROC requires 12 weeks or more of cultivation until AMF-colonized root material can efficiently be used in small amounts for inoculation of new ROC, whereas ROL-based ROC requires less time. In one preferred embodiment of the invention, ROL-based ROC requires only 6-8 weeks until AMF-colonized root material can be used to efficiently inoculate new ROC. Further, whereas ROC-based ROC must be cultivated for longer periods of about 12-20 weeks before AMF spores can be harvested, ROL-based ROC enables shortening the time until harvest. In another preferred embodiment of the invention, the fungal material from ROL-based ROC can be harvested after 6-10 weeks in total.

## FIGURES

The invention is further illustrated by the following non-limiting examples and the attached figures in which:

**Figure 1** shows representative pictures of a newly inoculated Petri-dish (ROC) and an Erlenmeyer flask (ROL) one week after inoculation, respectively. About 0.15 grams of mycorrhized root material were used for inoculation of split-plates (20 ml medium in root- and fungal compartment, each) and about 1.5 grams were used for inoculation of Erlenmeyer flasks (400 ml medium).

**Figure 2** shows the time scale of one experimental setup to produce ROL based ROCs. Solid lines indicate low-P (3 $\mu$M) ROL, dotted lines ROC. ROL cultured material was used to setup new ROLs (1.5 g each) and simultaneously new ROCs (0.15 g each). Arrows indicate the weekly ROC harvesting time points, after the starting period (here: 14 weeks, when ROCs are cultured for 8 weeks).

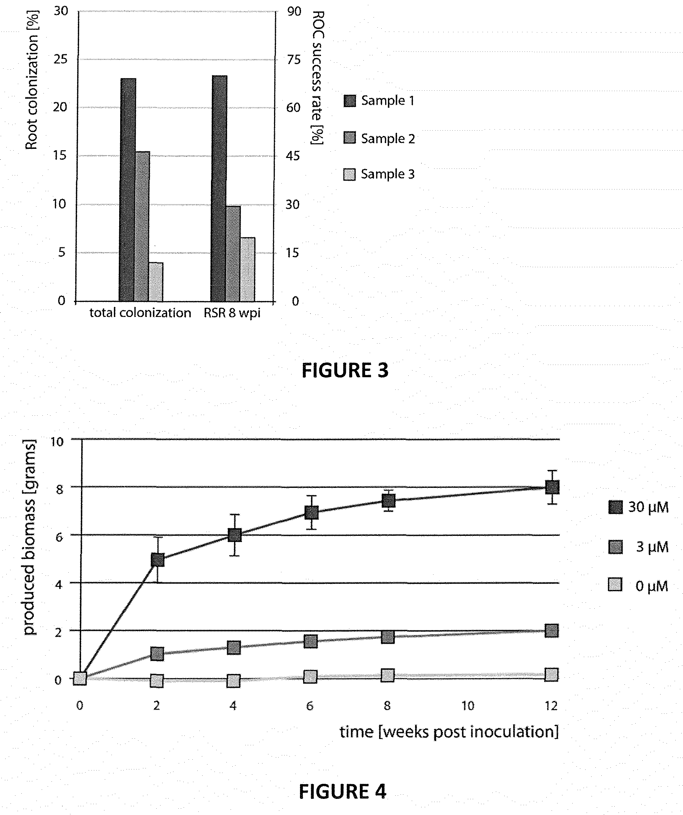

**Figure 3** shows the comparison of mycorrhization rate and ROC success rate (RSR). Three ROCs at different growth stages (different grey shades) were taken either for direct estimation of % root colonization by methyl-blue staining or, for indirect estimation by inoculation of new ROCs and estimation of RSR after 8 weeks. The % mycorrhization of the mother-culture corresponds to the success rate of newly inoculated ROCs, thus the RSR can be used to estimate the mycorrhization of the mother culture.

**Figure 4** shows the biomass production of mycorrhizal chicory roots in ROL with different phosphate concentrations. 1.5 grams (fresh weight) of Roots were inoculated in 30 $\mu$M (high-P, ♦), 3 $\mu$M (low-P, ▲) or without any phosphate in the medium (no-P, ■). Gained root fresh weight was measured every second week. Average fresh weight of 5 root systems (for high-P and low-P) or 3 root systems (for no-P) and standard deviations (error bars) are shown.

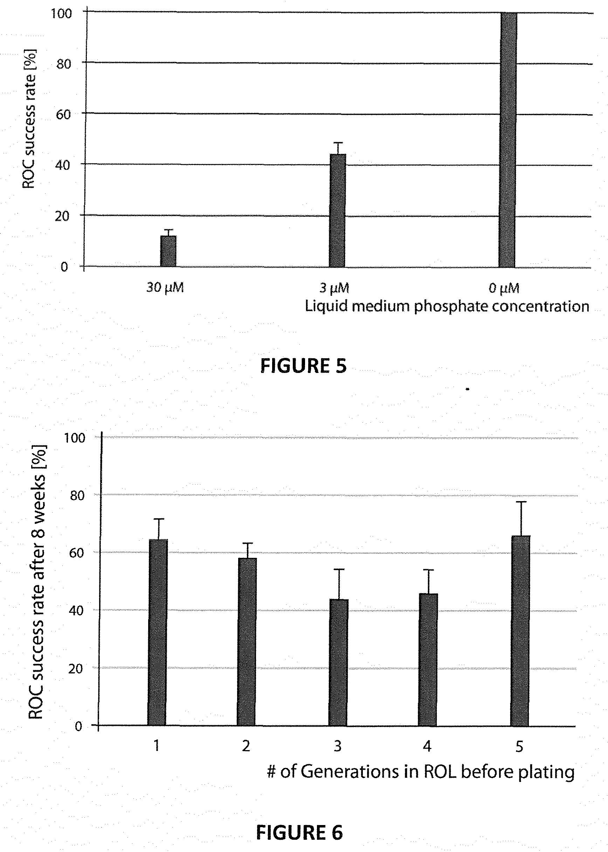

**Figure 5** shows the comparison of high-P and low-P ROLs. Nine ROL flasks with high phosphate (30 $\mu$M) and 9 flasks with low phosphate content (3 $\mu$M) as well as 3 flasks without phosphate were grown for about 8 weeks and used to inoculate 10 new ROCs, from each flask. The RSR (started with 0.15 g ROL material) was determined after 8 weeks. Note, that the no-P flasks were cultured 3-times longer than the high- and low-P ROLs. Error bars show standard errors.

**Figure 6** shows the stability of continuous ROL cycles (for 6 weeks each). Low-P ROLs were directly incubated from ROLs for 1, 2, 3, 4 or 5 rounds. Half of the root system was used to estimate the RSR (after 8 weeks). Bars show average RSR of 9 replicates (10 plates each) after 8 weeks. Error bars depict standard error.

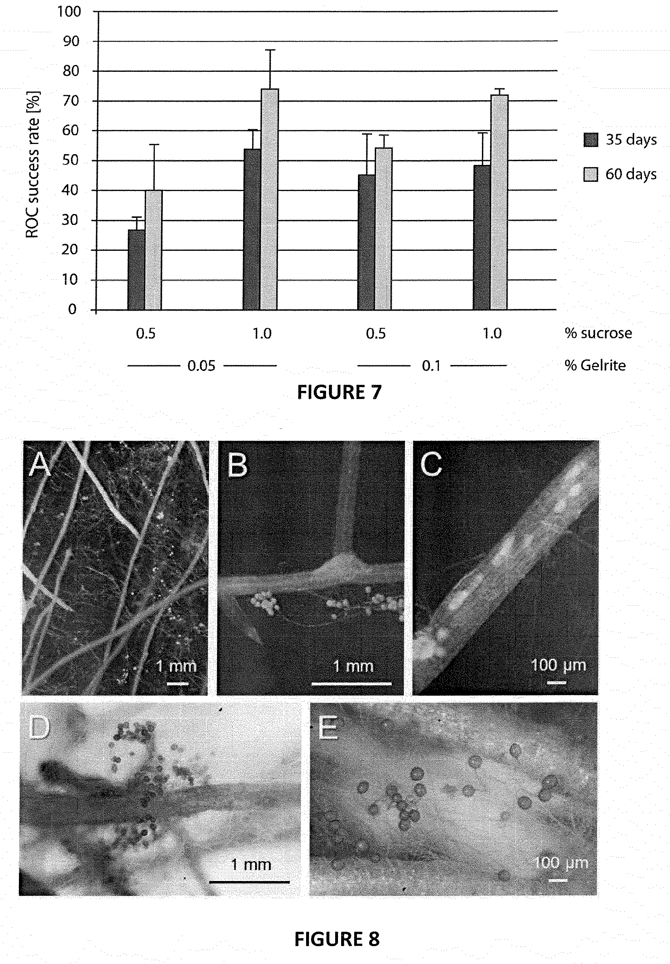

**Figure 7** shows the influence of gellan gum (in the fungal compartment) and sucrose (root compartment) concentration on ROC success rate (RSR). Roots grown in ROL for 8 weeks were used as inoculum for split-plate ROCs. Fungal compartments contained either 0.1% or 0.05% gellan gum and root compartments (0.3% gellan gum) either 0.5% or 1.0% sucrose. RSR was estimated after 35 and 60 days. Bars show the average of 3 replicates with 60 plates each, after 35 (dark grey) and 60 (light grey) days. Error bars depict standard deviation.

**Figure 8** shows intense mycorrhiza and mycelium formation and heavy AM fungal sporulation in root organ liquid-culture (ROL) in mMSR medium. Several other media compositions with different phosphorous and other nutrient as well as buffer-substance compositions were also successfully tested. The AM fungus had heavily sporulated already after 55 days, earlier and more intensely than when using the ROC method. After 93 days, spores are mature, darkened by a thickening and melanizing cell wall (a state that can be efficiently processed by chopping the roots, dried and stored without losing much viability). Fig. 8 A-C shows AMF-colonized root material 55 days after culture setup; lateral illumination to make vesicles better visible within the roots (whitish appearance because of lipid content). Fig. 8 A-C shows AMF-colonized root material D-E, 93 days after culture setup.

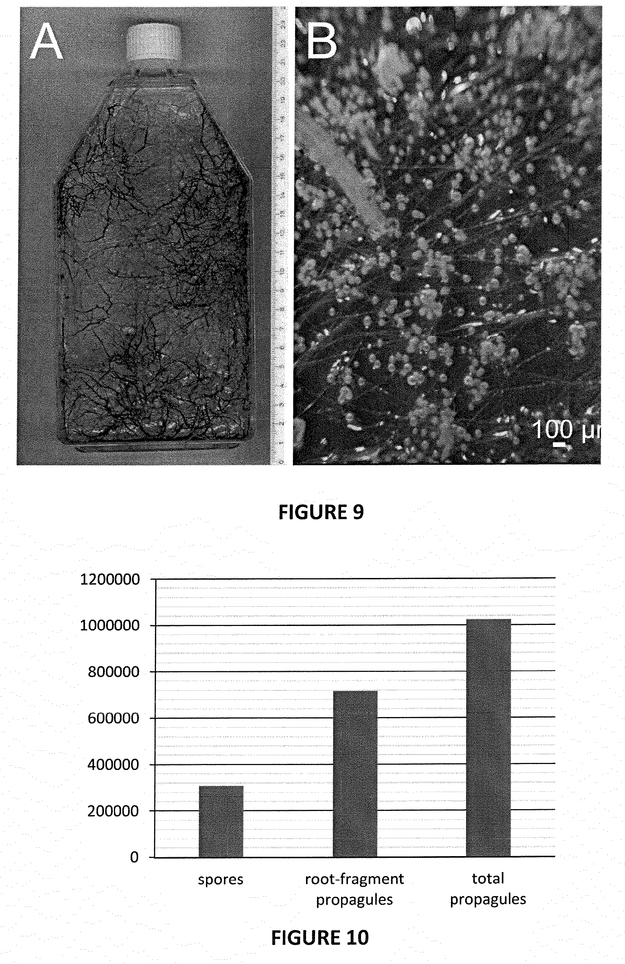

**Figure 9** shows a standard cell-culturing flasks with filter-lids for gas exchange, filled with 200 ml liquid culture medium (10% strength MS). Cultures were incubated without any movement (no shaking). After 3 months, a highly branched root system had developed (A) and AM fungal spores formed. After 5 month the AM fungi had sporulated heavily (B).

**Figure 10** shows results of ROL cultivation after 5 months in standard cell-culturing flasks with filter-lids for gas exchange, filled with 200 ml liquid culture medium (10% strength MS). Cultures were incubated without any movement (no shaking). After blending in a mixer, spores were harvested by sieving. Root fragments were stained and propagule numbers (colonized root fragments) quantified microscopically. In average, per liter more than 300000 spores and more than 700000 infective propagules were harvested (total: approx. 1025400 propagules, average from 5 ROLs).

**EXAMPLES**

The following examples are included to demonstrate particular embodiments of the invention. It should be appreciated by those of skill in the art that the techniques disclosed in the examples which follow represent techniques discovered by the inventors to function well in the practice of the invention, and thus can be considered to constitute particular modes for its practice. However, those of skill in the art should, in light of the present disclosure, appreciate that many changes can be made in the specific embodiments which are disclosed and still obtain a like or similar result without departing from the spirit and scope of the invention.

***Example 1: Biological material and root organ culture (ROC).***

*Rhizophagus irregularis* MUCL43194 (=DAOM181602, =DAOM197198), Biosystematic Research Center, Ottawa, Canada (Chabot et al. 1992) was cultivated in *in vitro* root organ culture (ROC, Fig. 1A) with *Agrobacterium rhizogenes* Ri-T-DNA transformed chicory *(Cichorium intybus)* roots (Fontaine *et al.,* 2004) on modified Strullu and Romand (MSR) medium (Strullu & Romand, 1986, modified by Declerck *et al.,* 1998) in split-plates (two-compartment Petri-dishes, Fig. 1A). ROC was maintained by cutting the colonized roots into pieces and transferring them onto the sugar-containing root compartments in new plates (Fortin *et al.,* 2002).

***Example 2: Initial root organ liquid culture (ROL).***

The initial ROL was established by inoculating 400 ml of liquid culture medium in a 500 ml Erlenmeyer flask with about 1.5 g of chicory roots from a split-plate culture. Cultures were incubated at room temperature (about 22°C) in the dark, under constant slow shaking (30 rpm) (Fig. 1B).

***Example 3: Culture method development.***

After initial *in vitro* culture establishment, all ROC and ROL media used were supplemented with 300 $\mu$M ammonium sulphate (= mMSR medium), because the MSR medium, although published as containing 180 $\mu$M (Declerck *et al.,* 1998), contains only 188 nM ammonium. Two different sucrose concentrations in the root compartment of the split-plates were tested, 0.5% (w/v) and 1% (w/v). For solidification, 0.3% (w/v) gellan gum (Gelrite™ Roth, Karlsruhe) was used for the root compartment and (after testing different concentrations) 0.1% or 0.05% (w/v) for the fungal compartment. The split-plates were incubated at 27°C in the dark.

***Example 4: Biomass production in root organ liquid culture.***

ROL was established as described in Example 2, but in mMSR medium.
Biomass production in ROL was measured by estimating the fresh-weight of roots after 0, 2, 4, 6, 8 and 12 weeks, by weighting them under sterile conditions (Fig. 2).

***Example 5: Determination of propagule propagation rate.***

Fungal colonization of the roots from ROL was studied microscopically by a line intersection method (McGonigle *et al.,* 1990) after methyl-blue staining (following the protocol of Grace & Stribley, 1991).
In order to determine the fungal propagation potential, the proportion of split-plates with colonized fungal compartments of all ROCs that were inoculated with root material at one time point were determined (ROC success rate, RSR). Split-plates with no or only few hyphae were counted negative, while split-plates with a densely growing hyphal network were counted positive. Three cultures from a batch of ROLs were randomly chosen. From each ROL, 2 g root material was used to inoculate 10 new split-plates with about 0.2 g root material each, and a part of the residual 2 g of roots was stained for measuring the root-length colonization.

It was observed, that fungal root colonization in liquid culture and the RSR of ROCs resulting from the respective ROL correspond to each other. For example, colonization rates for the three samples were 23%, 15%, and 4% and the RSR of the newly established split plates was 70%, 30%, and 20% after 8 weeks, respectively (Fig. 3).

The finding indicates that RSR gives information about root-length colonization on the one hand and about the capability of different conditions to result in a distinct proportion of successful ROCs on the other hand and can therefore be used as a measure for the percentage of root colonization and the vitality of the mother culture.

### Example 6: Phosphate concentration

To study whether root colonization in ROL could be improved by changing the usually applied standard phosphate content of media used for classical *in vitro* cultures, different $KH_2PO_4$ concentrations were tested: 30 $\mu$M $KH_2PO_4$ (standard concentration, 'high-P'), 3 $\mu$M ('low-P'), and some ROLs were setup without any added phosphate ('no-P'). For testing continuous ROLs for fungal propagation rates, ROLs were harvested every 6 weeks and the root material was split. One half (about 1.5 g) was used to set up a new ROL and the other half was used to set up 10 split-plate ROCs with about 0.15 g root material, each. After 8 weeks the rate of well colonized fungal compartments (RSR) was determined. To ensure that in low-P ROLs the fungal colonization does not drop after several generations (as found for high-P ROLs, before), the ROL cycle was repeated 5 times.

After 5 to 6 succeeding cycles of initial ROL tests, with about 1.5 g root material used to start new ROLs, a significant drop in ROC success rate occurred, indicating that the colonization of the chicory roots in ROL decreased over the duration of culturing. Because chicory roots grow very fast in the liquid MSR medium, fungal growth might be too slow for efficient root colonization. It was tested, whether the root growth and fungal colonization rate could be balanced, by reducing the phosphate concentration. Five flasks containing 30 $\mu$M (high-P), five flasks containing 3 $\mu$M (low-P), and three flasks containing 0 $\mu$M (no-p) $KH_2PO_4$ were inoculated with 1.5 g of root material and incubated in the dark for 12 weeks. The root biomass was measured every second week. For the low-P concentrations root growth was significantly reduced; after 4-6 weeks 1.5-2 g of new root material were produced, meaning a root biomass doubling within about 4 weeks (Fig. 4).

Based on the results shown in Fig. 4, the present inventors decided to use the root material from 6 weeks old ROLs to setup new 9 high-P and 9 low-P medium ROLs, and 3 ROLs with no-P medium. After 6 weeks the high- and low-P ROLs were harvested and used to inoculate 10 split-plate ROCs, each. The three no-P ROLs were harvested after 6 months. The ROC success rate (RSR) was estimated 8 weeks after inoculation. For the ROCs inoculated with material from low-P ROLs the RSR increased more than three-fold, compared with plates inoculated with material from high-P ROLs (Fig. 5). For material from the three no-P ROLs, a 100% RSR was obtained, demonstrating that the roots were still alive and vital after 6 months and became very well colonized by the AMF, over time.

### Example 7: Continuous root organ liquid culture

ROL was established as described in Example 2.

For initial trials of continuous ROL, cultures were harvested (8-9 g, respectively). Then, portions of about 1.5 g were used to set up new liquid cultures and about 0.2 g each was used to set up about 40 split-plate ROCs. After several ROL cycles it turned out that root colonization became low, as demonstrated by a low number of AMF-colonized split-plates after using the ROL material for new ROC setup.

To investigate whether low-P ROL can be used to inoculate new ROLs continuously, without losing fungal root colonization in 6-weeks culturing cycles, 9 flasks with low-P medium were inoculated with low-P ROL root material and grown for 6 weeks. This was repeated successively, always using 1.5 g root material (about half of the root material in a flask) as inoculum for a new ROL. The other half was used to start 10 ROCs to determine RSR after 8 weeks. As shown in Fig. 6 the 6 weeks ROL system results in stable ROC success rates of 44-65%.

### Example 8: Effect of sucrose and gellan gum concentration on fungal root colonization and RSR

The gellan gum concentration in the fungal compartment could be shown to considerably influence the successful colonization of the fungal compartment. While for the lower concentrations (0.05% and 0.1% w/v) 40-70% of the fungal compartments were colonized after 60 days, the usually used gellan gum concentration of 0.3% (w/v) resulted in only 20% RSR after 60 days (not shown). Best results were obtained with the combination 0.05% or 0.1% gellan gum and 1.0% sucrose (Fig. 7), which was chosen for further experiments and production. In addition, generally it is much more difficult to harvest the fungal material from 0.3% gellan gum plates, because it is not possible to simply pour out the medium from the fungal compartment without getting root contamination (roots often cross the border in split plates;

if material can just be poured out, the roots stay connected to the root system and do not contaminate the fungal material even if they crossed the compartment-border).

In the root compartment, the standard concentration of 0.3% gellan gum was used, because a test with 60 split-plates with 0.05% gellan gum in the root compartment did not result in higher RSR and the lower gellan gum concentrations would not allow fungal compartment harvesting without root contamination. If, however, root and fungal compartment should be harvested together, the cultures can be setup with low concentrations.

### Example 9: Scalable ROL cultivation in standard cell-culturing suspension flasks

ROL was established as described in Example 2 (Fig. 8).

*Rhizophagus irregularis* MUCL43194 (=DAOM181602, =DAOM197198) was cultivated in ROL as described in example 7. *Agrobacterium rhizogenes* Ri-T-DNA transformed chicory *(Cichorium intybus)* roots from these ROLs were cut with a sterile blender into small fragments of approx. 0.5-1 cm in lengths.

*About* 1 g of blended chicory roots from ROL culture were used to inoculate standard cell-culturing flasks with filter-lids for gas exchange, which were filled with 200 ml liquid culture medium (10% strength MS medium, supplemented with isoflavonoid-containing plant extract). Cultures were incubated at relatively low temperature, about 23°C, in the dark, without any movement (no shaking). After 3 months, a highly branched root system had developed and AM fungal formed, and after 5 month the AM fungi had sporulated heavily (Fig. 10).

The material from ROLs was blended to small root-fragments and spores were harvested by sieving. Root fragments were stained for microscopic analysis of colonizing AM fungi by a line intersection method (McGonigle *et al.,* 1990) after methyl-blue staining (following the protocol of Grace & Stribley, 1991). Additionally, propagule numbers (colonized root fragments) from the blended root fraction was also quantified microscopically. In average, per liter more than 300000 spores and more than 700000 infective propagules were harvested (Fig. 11), despite the cool cultivation temperatures, and more than 53% of the root length was colonized by the AM fungus. Individual root fragments carried up to more than 40 fungal vesicles. About 10% of root fragments carried more than 5 vesicles, thus blending the roots into smaller fragments would further increase the propagule numbers. The estimated active propagule number was more than $10^6$ propagules per Liter.

### Cited Literature

Bécard G, Fortin JA. 1988. Early events of vesicular-arbuscular mycorrhiza formation on Ri T-DNA transformed roots. New Phytologist 108: 211-218.

Campagnac E, Lounès-Hadj Sahraoui A, Debiane D, Fontaine J, Laruelle F, Garçon G, Verdin A, Durand R, Shirali P, Grandmougin-Ferjani A. 2009. Arbuscular mycorrhiza partially protect chicory roots against oxidative stress induced by two fungicides, fenpropimorph and fenhexamid. Mycorrhiza 20: 167-178.

Corradi N, Bonfante P. 2012. The arbuscular mycorrhizal symbiosis: origin and evolution of a beneficial plant infection. PLoS Pathogens 8: e1002600.

Cranenbrouck S, Voets L, Bivort C, Renard L, Strullu D-G, Declerck S. 2005. Methodologies for in vitro cultivation of arbuscular mycorrhizal fungi with root organs. In: Declerck S, Fortin JA, Strullu D-G eds. In Vitro culture of mycorrhizas: Springer Berlin Heidelberg: 341-375.

Declerck S, Strullu DG, Plenchette C. 1998. Monoxenic culture of the intraradical forms of Glomus sp. isolated from a tropical ecosystem: a proposed methodology for germplasm collection. Mycologia 90: 579-585.

Fonseca HMAC, Berbara RLL, Pereira ML. 2006. Lunularia cruciata, a potential in vitro host for Glomus proliferum and G. intraradices. Mycorrhiza 16: 503-508.

Fontaine J, Grandmougin-Ferjani A, Glorian V, Durand R. 2004. 24-Methyl/methylene sterols increase in monoxenic roots after colonization by arbuscular mycorrhizal fungi. New Phytologist 163: 159-167.

Fortin JA, Bécard G, Declerck S, Dalpé Y, St Arnaud M, Coughlan AP, Piché Y. 2002. Arbuscular mycorrhiza on root-organ cultures. Canadian Journal of Botany 80: 1-20.

Grace C, Stribley DP. 1991. A safer procedure for routine staining of vesicular-arbuscular mycorrhizal fungi. Mycological Research 95: 1160-1162.

Harrier LA. 2001. The arbuscular mycorrhizal symbiosis: a molecular review of the fungal dimension. Journal of Experimental Botany 52: 469-478.

IJdo M, Cranenbrouck S, Declerck S. 2011. Methods for large-scale production of AM fungi: past, present, and future. Mycorrhiza 21: 1-16.

Jolicoeur M, Williams RD, Chavarie C, Fortin JA, Archambault J. 1999. Production of Glomus intraradices propagules, an arbuscular mycorrhizal fungus, in an airlift bioreactor. Biotechnology and Bioengeneering 63: 224-232.

Kondo O, Honda H, Taya M, Kobayashi T. 1989. Comparison of growth properties of carrot hairy root in various bioreactors. Applied Microbiology and Biotechnology 32: 291-294.

McGonigle TP, Miller MH, Evans DG, Fairchild GL, Swan JA. 1990. A new method which gives an objective measure of colonization of roots by vesicular-arbuscular mycorrhizal fungi. New Phytologist 115: 495-501.

Mckelvey SA, Gehrig JA, Hollar KA, Curtis WR. 1993. Growth of plant root cultures in liquid- and gas-dispersed reactor environments. Biotechnology Progress 9: 317-322.

Mosse B, Hepper C. 1975. Vesicular-arbuscular mycorrhizal infections in root organ cultures. Physiological Plant Pathology 5: 215-&.

Mugnier J, Mosse B. 1987. Vesicular-arbuscular mycorrhizal infection in transformed root-inducing T-DNA roots grown axenically. Phytopathology 77: 1045-1050.

Nuutila AM, Vestberg M, Kauppinen V. 1995. Infection of hairy roots of strawberry (Fragaria x Ananassa-Duch) with arbuscular mycorrhizal fungus. Plant Cell Reports 14: 505-509.

Redecker D, Schüßler A, Stockinger H, Stürmer SL, Morton JB, Walker C. 2013. An evidence-based consensus for the classification of arbuscular mycorrhizal fungi (Glomeromycota). Mycorrhiza in press: DOI: 10.1007/s00572-00013-00486-y.

Schüßler A. 2000. Glomus claroideum forms an arbuscular mycorrhiza-like symbiosis with the hornwort Anthoceros punctatus. Mycorrhiza 10: 15-21.

Schüßler A, Walker C 2011. Evolution of the 'Plant-Symbiotic' Fungal Phylum, Glomeromycota. In: Pöggeler S, Wöstemeyer J eds. Evolution of fungi and fungal-like organisms. Springer-Verlag, Berlin Heidelberg, pp. 163-185.

Smith SE, Read DJ. 2008. Mycorrhizal symbiosis. Academic Press, London.

St-Arnaud M, Hamel C, Vimard B, Caron M, Fortin JA. 1996. Enhanced hyphal growth and spore production of the arbuscular mycorrhizal fungus Glomus intraradices in an in vitro system in the absence of host roots. Mycological Research 100: 328-332.

Strack D, Fester T, Hause B, Schliemann W, Walter MH. 2003. Arbuscular mycorrhiza: biological, chemical, and molecular aspects. Journal of Chemical Ecology 29: 1955-1979.

Strullu DG, Romand C. 1986. Method for obtaining vesicular-arbuscular mycorrhizae in axenic conditions. Comptes Rendus De L Academie Des Sciences Serie Iii-Sciences De La Vie-Life Sciences 303: 245-&.

Tepfer D. 1990. Genetic transformation using Agrobacterium rhizogenes. Physiologia Plantarum 79: 140-146.

## Claims

1. A method of producing arbuscular mycorrhizal fungi material, said method comprising:

   a. continuously culturing root material in liquid culture medium, wherein said root material is

      i. capable of building a branched secondary root system *in vitro,* and
      ii. colonized by arbuscular mycorrhizal fungi.

2. The method of claim 1, further comprising a step of harvesting at least a portion of said root material colonized by said arbuscular mycorrhizal fungi.

3. The method of claim 1 or 2, further comprising the step of passaging at least a portion of said harvested colonized root material to fresh culture medium.

4. The method of any of claims 1-3, wherein at least a portion of the harvested colonized root material is used as an inoculum.

5. The method of any of claims 2-4, wherein the passaging step can precede the harvesting step.

6. The method of any of claims 1-5, wherein said liquid culture medium contains 30 $\mu$M or less phosphate during any of the culturing phases.

7. The method of any of claims 1-6, wherein said liquid medium contains 20 mM ammonium or less during any of the culturing phases.

8. The method of any claims 1-7, wherein the arbuscular mycorrhizal fungus is selected from the fungal phylum *Glomeromycota*, including all classes (currently *Glomeromycetes*), orders (currently *Paraglomerales, Archaeospo-*

*rales, Diversisporales, Glomerales*), families, genera and species in the phylum *Glomeromycota.*

9. The method of any of claims 1-8, wherein the root material is derived from a plant selected from the group of chicory, clover, carrot, cucumber, potato, soybean, haricot bean, ginger, kalanchoe, strawberry or bindweed.

10. The method of any one of claims 1-9, wherein the root material is transformed with T-DNA.

11. The method of claim 10, wherein said T-DNA is derived from *Agrobacterium.*

12. The method of any one of claims 1-11, wherein the liquid medium is supplemented with plant hormones and/or vitamins or further contains antibiotics

13. A contamination-free arbuscular mycorrhizal inoculum composition produced under sterile conditions by the method of any one of claims 1-12, comprising arbuscular mycorrhizal fungi propagules in a particle size in the range down to 30 $\mu$m and propagule densities of up to more than $10^6$ arbuscular mycorrhizal fungi propagules per gram dry mass of root material.

14. A bioreactor for continuous *in vitro* cultivation of arbuscular mycorrhizal fungi, comprising

    a. root material capable of building a branched secondary root system inoculated with and colonized by arbuscular mycorrhizal fungi, wherein the arbuscular mycorrhizal fungus is selected from the fungal phylum *Glomeromycota,* including all classes (currently *Glomeromycetes),* orders (currently *Paraglomerales, Archaeosporales, Diversisporales, Glomerales*), families, genera and species in the phylum *Glomeromycota*;
    b. and liquid culture medium, wherein said liquid culture medium contains 30 $\mu$M or less phosphate during any of the culturing phases, and/or wherein said liquid medium contains 20 mM ammonium or less during any of the culturing phases, and/or wherein the liquid medium is supplemented with plant hormones, and/or vitamins or further contains antibiotics.

15. Use of root material that is capable of building a branched secondary root system *in vitro* for continuously producing arbuscular mycorrhizal fungi material in liquid culture medium.

**Patentansprüche**

1. Verfahren zum Herstellen von arbuskulärem Mykorrhizapilz-Material, das Verfahren umfassend:

    a. Kontinuierliche Kultivierung von Wurzelmaterial in flüssigem Kulturmedium, wobei das Wurzelmaterial

        i. fähig ist, ein verzweigtes sekundäres Wurzelsystem *in vitro* zu bilden, und
        ii. durch arbuskuläre Mykorrhizapilze besiedelt ist.

2. Verfahren nach Anspruch 1, ferner umfassend einen Schritt des Erntens mindestens eines Teils des von den arbuskulären Mykorrhizapilzen besiedelten Wurzelmaterials.

3. Verfahren nach Anspruch 1 oder 2, ferner umfassend den Schritt des Passagierens mindestens eines Teils des geernteten, besiedelten Wurzelmaterials in ein frisches Kulturmedium.

4. Verfahren nach einem der Ansprüche 1 bis 3, wobei mindestens ein Teil des geernteten, besiedelten Wurzelmaterials als ein Inokulum verwendet wird.

5. Verfahren nach einem der Ansprüche 2 bis 4, wobei der Passagierungsschritt dem Ernteschritt vorausgehen kann.

6. Verfahren nach einem der Ansprüche 1 bis 5, wobei das flüssige Kulturmedium während einer der Kultivierungsphasen 30 $\mu$M oder weniger Phosphat enthält.

7. Verfahren nach einem der Ansprüche 1 bis 6, wobei das flüssige Kulturmedium während einer der Kultivierungsphasen 20 mM oder weniger Ammonium enthält.

8. Verfahren nach einem der Ansprüche 1 bis 7, wobei der arbuskuläre Mykorrhizapilz von dem Pilzstamm *Glomeromycota*, einschließlich aller Klassen (aktuell *Glomeromycetes*), Ordnungen (aktuell *Paraglomerales, Archaeosporales, Diversisporales, Glomerales*), Familien, Gattungen und Arten in dem Stamm *Glomeromycota,* ausgewählt wird.

9. Verfahren nach einem der Ansprüche 1 bis 8, wobei das Wurzelmaterial aus einer Pflanze gewonnen wird, die aus der Gruppe von Zichorie, Klee, Mohrrübe, Gurke, Kartoffel, Sojabohne, Gartenbohne, Ingwer, Kalanchoe, Erdbeere oder Winde ausgewählt wird.

10. Verfahren nach einem der Ansprüche 1 bis 9, wobei das Wurzelmaterial mit T-DNA transformiert wird.

11. Verfahren nach Anspruch 10, wobei die T-DNA aus *Agrobacterium* gewonnen wird.

12. Verfahren nach einem der Ansprüche 1 bis 11, wobei das flüssige Medium mit Pflanzenhormonen und/oder Vitaminen ergänzt ist oder ferner Antibiotika enthält.

13. Kontaminationsfreie arbuskuläre Mykorrhizainokulum-Zusammensetzung, die unter sterilen Bedingungen durch das Verfahren eines der Ansprüche 1 bis 12 hergestellt wird, umfassend Verbreitungseinheiten von arbuskulären Mykorrhizapilzen in einer Partikelgröße in dem Bereich bis hinunter zu 30 $\mu$m und Verbreitungseinheitsdichten bis mehr als $10^6$ Verbreitungseinheiten von arbuskulären Mykorrhizapilzen pro Gramm Trockenmasse des Wurzelmaterials.

14. Bioreaktor für kontinuierliche *in-vitro*-Kultivierung von arbuskulären Mykorrhizapilzen, umfassend

> a. Wurzelmaterial, das fähig ist, ein verzweigtes, sekundäres Wurzelsystem zu bilden, das mit arbuskulären Mykorrhizapilzen inokuliert und davon besiedelt ist, wobei der arbuskuläre Mykorrhizapilz von dem Pilzstamm *Glomeromycota*, einschließlich aller Klassen (aktuell *Glomeromycetes*), Ordnungen (aktuell *Paraglomerales, Archaeosporales, Diversisporales, Glomerales*), Familien, Gattungen und Arten in dem Stamm *Glomeromycota*, ausgewählt wird;
> b. und flüssiges Kulturmedium, wobei das flüssige Kulturmedium während einer der Kultivierungsphasen 30 $\mu$M oder weniger Phosphat enthält, und/oder wobei das flüssige Kulturmedium während einer der Kultivierungsphasen 20 mM Ammonium oder weniger enthält, und/oder wobei das flüssige Medium mit Pflanzenhormonen und/oder Vitaminen ergänzt ist oder ferner Antibiotika enthält.

15. Verwendung von Wurzelmaterial, das fähig ist, *in vitro* ein verzweigtes, sekundäres Wurzelsystem zum kontinuierlichen Herstellen von arbuskulärem Mykorrhizapilz-Material in flüssigem Kulturmedium zu bilden.


**Revendications**

1. Procédé de production d'un matériau de champignons mycorhiziens arbusculaires, ledit procédé comprenant :

> a. un matériau de racine de culture en continu dans un milieu de culture liquide, ledit matériau de racine étant

>> i. capable de construire un système de racine secondaire ramifié *in vitro,* et
>> ii. colonisé par des champignons mycorhiziens arbusculaires.

2. Procédé selon la revendication 1, comprenant en outre une étape de récolte d'au moins une partie dudit matériau racine colonisé par lesdits champignons mycorhiziens arbusculaires.

3. Procédé selon la revendication 1 ou 2, comprenant en outre l'étape consistant à faire passer au moins une partie dudit matériau de racine colonisé récolté à un milieu de culture frais.

4. Procédé selon l'une quelconque des revendications 1 à 3, au moins une partie du matériau de racine colonisé récolté étant utilisée en tant qu'inoculum.

5. Procédé selon l'une quelconque des revendications 2 à 4, l'étape de passage pouvant précéder l'étape de récolte.

6. Procédé selon l'une quelconque des revendications 1 à 5, ledit milieu de culture liquide contenant 30 $\mu$M ou moins

de phosphate pendant l'une quelconque des phases de culture.

7. Procédé selon l'une quelconque des revendications 1 à 6, ledit milieu liquide contenant 20 mM d'ammonium ou moins pendant l'une quelconque des phases de culture.

8. Procédé selon l'une quelconque des revendications 1 à 7, le champignon mycorhizien arbusculaire étant choisi parmi le phylum fongique *Glomeromycota*, comprenant toutes les classes (couramment *Glomeromycota*), ordres (couramment *Paraglomerales*, *Archaeosporales, Diversisporales, Glomerales*), familles, genres et espèces dans le phylum *Glomeromycota.*

9. Procédé selon l'une quelconque des revendications 1 à 8, le matériau de racine étant dérivé d'une plante choisie dans le groupe de la chicorée, le trèfle, la carotte, le concombre, la pomme de terre, le soja, le haricot blanc, le gingembre, la kalanchoé, la fraise ou le liseron.

10. Procédé selon l'une quelconque des revendications 1 à 9, le matériau de racine étant transformé avec T-ADN.

11. Procédé selon la revendication 10, ledit T-ADN étant dérivé *d'Agrobacterium.*

12. Procédé selon l'une quelconque des revendications 1 à 11, le milieu liquide étant additionné d'hormones et/ou de vitamines végétales ou contenant en outre des antibiotiques.

13. Composition d'inoculum mycorhizien arbusculaire sans contamination produite dans des conditions stériles par le procédé selon l'une quelconque des revendications 1 à 12, comprenant des propagules de champignons mycorhiziens arbusculaires dans une taille de particule dans la plage allant jusqu'à 30 $\mu$m et des densités de propagules allant jusqu'à plus de $10^6$ propagules de champignons mycorhiziens arbusculaires par gramme de masse sèche de matériau racine.

14. Bioréacteur pour la culture *in vitro* continue de champignons mycorhiziens arbusculaires, comprenant

    a. un matériau de racine capable de construire un système de racine secondaire ramifié inoculée avec et colonisé par des champignons mycorhiziens arbusculaires, le champignon mycorhizien arbusculaire étant choisi parmi le phylum fongique *Glomeromycota,* comprenant toutes les classes (couramment *Glomeromycota*), ordres (couramment *Paraglomerales, Archaeosporales, Diversisporales, Glomerales*), familles, genres et espèces dans le phylum *Glomeromycota*;
    b. et un milieu de culture liquide, ledit milieu de culture liquide contenant 30 $\mu$M ou moins de phosphate pendant l'une quelconque des phases de culture, et/ou ledit milieu liquide contenant 20 mM d'ammonium ou moins pendant l'une quelconque des phases de culture, et/ou le milieu liquide étant additionné d'hormones et/ou de vitamines végétales ou contenant en outre des antibiotiques.

15. Utilisation d'un matériau de racine qui est capable de construire un système de racine secondaire ramifié *in vitro* pour produire en continu un matériau de champignons mycorhiziens arbusculaires dans un milieu de culture liquide.

FIGURE 1

FIGURE 2

**FIGURE 3**

**FIGURE 4**

**FIGURE 5**

**FIGURE 6**

**FIGURE 7**

**FIGURE 8**

**FIGURE 9**

**FIGURE 10**

## REFERENCES CITED IN THE DESCRIPTION

### Patent documents cited in the description

- FR 2856553 A1
- WO 2009090220 A
- US 4599312 A
- FR 2856553
- EP 0209627 A
- EP 0172085 A
- US 5554530 A
- EP 0456808 A

### Non-patent literature cited in the description

- **BÉCARD G ; FORTIN JA.** Early events of vesicular-arbuscular mycorrhiza formation on Ri T-DNA transformed roots. *New Phytologist,* 1988, vol. 108, 211-218
- **CAMPAGNAC E ; LOUNÈS-HADJ SAHRAOUI A ; DEBIANE D ; FONTAINE J ; LARUELLE F ; GARÇON G ; VERDIN A ; DURAND R ; SHIRALI P ; GRANDMOUGIN-FERJANI A.** Arbuscular mycorrhiza partially protect chicory roots against oxidative stress induced by two fungicides, fenpropimorph and fenhexamid. *Mycorrhiza,* 2009, vol. 20, 167-178
- **CORRADI N ; BONFANTE P.** The arbuscular mycorrhizal symbiosis: origin and evolution of a beneficial plant infection. *PLoS Pathogens,* 2012, vol. 8, e1002600
- Methodologies for in vitro cultivation of arbuscular mycorrhizal fungi with root organs. **CRANENBROUCK S ; VOETS L ; BIVORT C ; RENARD L ; STRULLU D-G ; DECLERCK S.** In Vitro culture of mycorrhizas. Springer Berlin Heidelberg, 2005, 341-375
- **DECLERCK S ; STRULLU DG ; PLENCHETTE C.** Monoxenic culture of the intraradical forms of Glomus sp. isolated from a tropical ecosystem: a proposed methodology for germplasm collection. *Mycologia,* 1998, vol. 90, 579-585
- **FONSECA HMAC ; BERBARA RLL ; PEREIRA ML.** Lunularia cruciata, a potential in vitro host for Glomus proliferum and G. intraradices. *Mycorrhiza,* 2006, vol. 16, 503-508
- **FONTAINE J ; GRANDMOUGIN-FERJANI A ; GLORIAN V ; DURAND R.** 24-Methyl/methylene sterols increase in monoxenic roots after colonization by arbuscular mycorrhizal fungi. *New Phytologist,* 2004, vol. 163, 159-167
- **FORTIN JA ; BÉCARD G ; DECLERCK S ; DALPÉ Y ; ST ARNAUD M ; COUGHLAN AP ; PICHÉ Y.** Arbuscular mycorrhiza on root-organ cultures. *Canadian Journal of Botany,* 2002, vol. 80, 1-20
- **GRACE C ; STRIBLEY DP.** A safer procedure for routine staining of vesicular-arbuscular mycorrhizal fungi. *Mycological Research,* 1991, vol. 95, 1160-1162
- **HARRIER LA.** The arbuscular mycorrhizal symbiosis: a molecular review of the fungal dimension. *Journal of Experimental Botany,* 2001, vol. 52, 469-478
- **IJDO M ; CRANENBROUCK S ; DECLERCK S.** Methods for large-scale production of AM fungi: past, present, and future. *Mycorrhiza,* 2011, vol. 21, 1-16
- **JOLICOEUR M ; WILLIAMS RD ; CHAVARIE C ; FORTIN JA ; ARCHAMBAULT J.** Production of Glomus intraradices propagules, an arbuscular mycorrhizal fungus, in an airlift bioreactor. *Biotechnology and Bioengeneering,* 1999, vol. 63, 224-232
- **KONDO O ; HONDA H ; TAYA M ; KOBAYASHI T.** Comparison of growth properties of carrot hairy root in various bioreactors. *Applied Microbiology and Biotechnology,* 1989, vol. 32, 291-294
- **MCGONIGLE TP ; MILLER MH ; EVANS DG ; FAIRCHILD GL ; SWAN JA.** A new method which gives an objective measure of colonization of roots by vesicular-arbuscular mycorrhizal fungi. *New Phytologist,* 1990, vol. 115, 495-501
- **MCKELVEY SA ; GEHRIG JA ; HOLLAR KA ; CURTIS WR.** Growth of plant root cultures in liquid- and gas-dispersed reactor environments. *Biotechnology Progress,* 1993, vol. 9, 317-322
- **MOSSE B ; HEPPER C.** Vesicular-arbuscular mycorrhizal infections in root organ cultures. *Physiological Plant Pathology,* 1975, vol. 5, 215
- **MUGNIER J ; MOSSE B.** Vesicular-arbuscular mycorrhizal infection in transformed root-inducing T-DNA roots grown axenically. *Phytopathology,* 1987, vol. 77, 1045-1050

- **NUUTILA AM ; VESTBERG M ; KAUPPINEN V.** Infection of hairy roots of strawberry (Fragaria x Ananassa-Duch) with arbuscular mycorrhizal fungus. *Plant Cell Reports,* 1995, vol. 14, 505-509
- **REDECKER D ; SCHÜßLER A ; STOCKINGER H ; STÜRMER SL ; MORTON JB ; WALKER C.** An evidence-based consensus for the classification of arbuscular mycorrhizal fungi (Glomeromycota). *Mycorrhiza,* 2013
- **SCHÜßLER A.** Glomus claroideum forms an arbuscular mycorrhiza-like symbiosis with the hornwort Anthoceros punctatus. *Mycorrhiza,* 2000, vol. 10, 15-21
- Evolution of the 'Plant-Symbiotic' Fungal Phylum, Glomeromycota. **SCHÜßLER A ; WALKER C.** Evolution of fungi and fungal-like organisms. Springer-Verlag, 2011, 163-185
- **SMITH SE ; READ DJ.** Mycorrhizal symbiosis. Academic Press, 2008

- **ST-ARNAUD M ; HAMEL C ; VIMARD B ; CARON M ; FORTIN JA.** Enhanced hyphal growth and spore production of the arbuscular mycorrhizal fungus Glomus intraradices in an in vitro system in the absence of host roots. *Mycological Research,* 1996, vol. 100, 328-332
- **STRACK D ; FESTER T ; HAUSE B ; SCHLIEMANN W ; WALTER MH.** Arbuscular mycorrhiza: biological, chemical, and molecular aspects. *Journal of Chemical Ecology,* 2003, vol. 29, 1955-1979
- **STRULLU DG ; ROMAND C.** Method for obtaining vesicular-arbuscular mycorrhizae in axenic conditions. *Comptes Rendus De L Academie Des Sciences Serie Iii-Sciences De La Vie-Life Sciences,* 1986, vol. 303, 245
- **TEPFER D.** Genetic transformation using Agrobacterium rhizogenes. *Physiologia Plantarum,* 1990, vol. 79, 140-146